# EUROPÄISCHE PATENTSCHRIFT

(11) **EP 2 073 406 B1**
(45) Veröffentlichungstag und Bekanntmachung des Hinweises auf die Patenterteilung: **12.02.2014**
(21) Anmeldenummer: 07024402.5
(22) Anmeldetag: 17.12.2007
(51) Int. Cl.: H04B 10/00

(54) **Maschine mit optischer Kommunikation von einem ersten Maschinenteil zu einem zweiten Maschinenteil, das sich relativ zu dem ersten Maschinenteil dreht**
Machine with optical communication from one machine component to another machine component which is pivotable in relation to the first machine component
Machine dotée d'une communication optique entre une première partie de machine et une seconde partie de machine pivotant en fonction de la première partie de machine

(43) Veröffentlichungstag der Anmeldung: 24.06.2009
(73) Patentinhaber: Siemens Aktiengesellschaft, 80333 München (DE)
(72) Erfinder: Schierling, Hubert, Dr., 91052 Erlangen (DE); Schmidt, Richard, 91083 Baiersdorf (DE); Wetzel, Ulrich, 07980 Berga (DE)

(56) Entgegenhaltungen:
- DE-A1- 10 222 221
- DE-A1- 19 625 870
- US-A- 4 753 506
- US-A1- 2004 062 344

## Beschreibung

Die Erfindung betrifft eine Maschine mit optischer Kommunikation von einem ersten Maschinenteil zu einem zweiten Maschinenteil, das sich relativ zu dem ersten Maschinenteil dreht.

Die US 2004/062344 A1 offenbart eine Anordnung, bei der Daten von einem rotierenden Teil zu einem stationären Teil, z.B. eines Computertomographiesystems, übertragen werden. Dabei wird ein Lichtkanal von zwei optisch reflektierenden Bauteilen begrenzt, die zum stationären Teil der Maschine beziehungsweise zum beweglichen Teil der Maschine gehören. Eine Lichtquelle, die zur lichtmodulierten Datenübertragung dient, befindet sich am rotierenden Teils des Systems und strahlt moduliertes Licht, mit dem Informationen übertragen werden, in den Lichtkanal in beide entgegenlaufenden Kanalrichtungen. Die Lichtstrahlen werden durch Reflexion an den optisch reflektierenden Bauteilen einer Ringform folgend zu einem Lichtempfänger geleitet, der im stationären Teil der Maschine angeordnet ist.

Die US 4753506 offenbart ein Kommunikationssystem für die Raumfahrt, bei dem Daten von einem rotierbaren Teil zu einem stationären Teil übertragen werden. Dabei ist der Datensender außerhalb der Rotationsachse angeordnet. Um einen kontinuierlichen Datenfluss in jeder beliebigen Rotationsphase während der Rotation von dem drehbaren Maschinenteil zu dem stationären Maschinenteil zu erreichen, sendet eine Lichtquelle, die am stationären Maschinenteil angebracht ist, Licht in Form eines elliptischen Lichtkegels in Richtung der Detektorelemente, die auf dem rotierenden Maschinenteil derartig voneinander beabstandet angeordnet sind, dass zu jeder Zeit und in jeder Rotationsphase eine Lichtdetektionseinheit innerhalb des Lichtkegels von der Sendeeinrichtung liegt. In einer zweiten Ausführungsform offenbart die US 4753506 die Übertragung optischer Signale mittels acht Prismen, die entlang eines Rings am stationären Maschinenteil angeordnet sind und durch Lichtwellenleiterabschnitte miteinander verbunden sind. Die Prismen lenken Lichtanteile von Licht, das durch die Lichtwellenleiterabschnitte geleitet wird, unter Bildung eines Lichtkegels in Richtung der Oberfläche des rotierbaren Maschinenteils. Eine einzige Lichtdetektionseinheit, die in diesem Fall auf dem rotierbaren Maschinenteil angeordnet ist, kann somit zu jeder Zeit Signale innerhalb jeweils eines der acht durch die Lichtkegel gebildeten zylindrischen Oberflächen empfangen. Um die gleichmäßige Verteilung des Lichts innerhalb der acht voneinander beabstandet angeordneten Prismen zu gewährleisten, sind hinter der Lichtquelle, die das Licht in den Lichtwellenleiter einstrahlt, Kollimator- und Polarisationselemente angeordnet.

Die DE 196 25 870 A1 beschreibt eine Vorrichtung zum Empfangen optischer Signale mit einem lichtleitenden Gegenstand, in den das zu empfangende optische Signal einkoppelbar ist. Der lichtleitende Gegenstand besteht dabei z.B. aus Kunststoff, der bei Lichteinstrahlung mit einem Winkel zwischen 0° und 90° relativ zur Einstrahlungsoberfläche durch Absorption und Emission eine Lichtabgabe bewirkt, bei der das Licht eine Strahlungskomponente in Richtung einer Hauptausbreitungsrichtung des lichtleitenden Gegenstands aufweist.

Die DE 102 22 221 A1 offenbart eine Vorrichtung zur optischen Signalübertragung zwischen zwei zueinander beweglichen Einheiten. Dabei emittiert eine Lichtquelle Licht in einen Lichtwellenleiter. Dieses Licht kann von relativ zum Lichtwellenleiter bewegbaren Kopplern an unterschiedlichen Stellen des Lichtwellenleiters ausgekoppelt werden. Alternativ ist von den Kopplern auch Licht in den Lichtwellenleiter einkoppelbar.

Die US 2005/0013535 offenbart eine Vorrichtung zur Übertragung optischer Signale zwischen einem rotierenden und einem stationären Teil einer Maschine, bei der an einem ersten der beiden Teile eine optische Sendeeinrichtung und an einem zweiten der beiden Teile eine optische Empfangseinrichtung mit einem optischen Detektor angeordnet ist, über den von der optischen Sendeeinrichtung ausgesendete optische Signale empfangen werden, wobei die optische Empfangseinrichtung einen optischen Konzentrator mit einer zumindest annähernd hornförmigen Geometrie aufweist, der einfallende optische Strahlung über Innenreflexion an Seitenflächen des Konzentrators auf eine Detektionsfläche des Detektors zusammenführt.

Die US 6,043,916 offenbart eine Vorrichtung mit einer Sendeeinrichtung für Informationssignale und einer Empfangeinrichtung in Form einer kreisförmig gebogenen fluoreszierenden Lichtleiterfaser mit einem für die Informationssignale ausgelegten Detektor an mindestens einem Faserende, wobei der Sender die Informationssignale zu der fluoreszierenden Lichtleiterfaser in etwa rechtwinkelig zu dieser strahlt.

Es ist die Aufgabe der Erfindung, eine Maschine der eingangs genannten Gattung bereitzustellen, die relativ "kurz" bezogen auf die Drehachse gebaut und dadurch kompakt ist. Insbesondere soll die Maschine eine Hohlwelle umfassen können, es soll also die Übermittlung von Datensignalen jenseits der Drehachse erfolgen.

Die Aufgabe wird durch eine Maschine mit den Merkmalen gemäß Patentanspruch 1 gelöst. Erfindungsgemäß ist somit an einem der Maschinenteile ein konzentrisch zur Drehachse angeordneter ringförmiger Lichtwellenleiter vorgesehen, der die Eigenschaft hat, dass er einen Teil des eingekoppelten Lichts austreten lässt, oder umgekehrt von außen Licht eintreten lässt. Die Ausgestaltung und Anordnung des ringförmigen Lichtwellenleiters sollte dergestalt sein, dass das aus dem Lichtwellenleiter austretende Licht zum anderen Maschinenteil gelangt, also zu dem, an dem der Lichtwellenleiter nicht angeordnet ist, bzw. das Licht eintreten kann, das von dem anderen Maschinenteil abgestrahlt wurde.

Zur Erfindung gehört ausdrücklich die Ausführungsform, dass der Lichtwellenleiter Teil der Empfangseinrichtung für Lichtsignale ist. Besonders einfach ist die Ausgestaltung allerdings, wenn der Lichtwellenleiter Teil der Lichtsignal-Sendeeinrichtung ist, wobei diese Lichtsignal-Sendeeinrichtung eine Lichtquelle umfasst, die an einer Einkoppelstelle Licht einkoppeln kann.

Durch das Bereitstellen des Lichtwellenleiters muss nicht notwendigerweise eine Mehrzahl von Lichtquellen verwendet werden. Es ist kein Bauraum für eine Aufweitung des von der Lichtquelle abgegebenen Lichtstrahls notwendig. Vielmehr kann der Lichtwellenleiter zusammen mit der Lichtquelle in sehr kurzer axialer Entfernung zu einer Empfangseinrichtung für Lichtsignale angeordnet werden, so dass die Maschine kurz baut.

Es gibt unterschiedliche Methoden, wie gewährleistet werden kann, dass Licht aus dem Lichtwellenleiter austritt. Es kann definiert ein Austrittsort dadurch festgelegt werden, dass bei einem in an sich bekannter Weise aus einem Kern und einem Mantel gebildeter Lichtwellenleiter, bei dem das den Kern bildende Material einen niedrigeren Brechungsindex aufweist als das den Mantel bildende Material, der Mantel über den gesamten Umfang des Lichtwellenleiterrings (also nicht über den Querschnitt des Lichtwellenleiters, sondern um den konzentrisch zur Drehachse definierten Umfang) hinweg unterbrochen ist. Besonders einfach lässt sich dies als durchlaufender Schlitz in dem Mantel ausbilden.

Bei einer anderen Ausführungsform ist im Lichtwellenleiter eine Vielzahl von Streuzentren ausgebildet. Diese sollen das Licht nicht in eine beliebige, sondern in eine vorbestimmte Richtung aus dem Lichtwellenleiter ablenken und sind daher in dem Lichtwellenleiter auf vorbestimmte Weise orientiert. Solche Streuzentren lassen sich in einen Lichtwellenleiterkern z. B. mit Hilfe eines Lasers einprägen.

Schließlich ist auch möglich, eine Seite des Lichtwellenleiters mit Einkerbungen zu versehen, welche bewirken, dass das an dieser Seite normalerweise reflektierte Licht schräg hinausgesandt wird, und zwar zu der den Einkerbungen entgegengesetzten Seite des Lichtwellenleiters hin, wo das Maschinenteil anzuordnen ist, an dem der Lichtwellenleiter nicht angeordnet ist, in der Regel also das Maschinenteil mit der Empfangseinrichtung.

In bisher üblicher Weise können die Lichtsignale von der Lichtsignal-Sendeeinrichtung axial (bezogen auf die Drehachse des zweiten Maschinenteils) zu der Empfangseinrichtung gesandt werden. Die Verwendung des Lichtwellenleiters ermöglicht es jedoch auch, z. B. durch geeignete Positionierung der Unterbrechungen in dem Mantel des Lichtwellenleiters, das Licht radial auszusenden, und zwar so, dass über den gesamten Umfang des Lichtwellenleiterrings Licht ausgekoppelt wird. Das nicht drehende Maschinenteil kann dann radial um das drehende Maschinenteil herum angeordnet werden, wodurch die Maschine in axialer Richtung in ganz besonderem Maße kurz baut.

Wie bereits erwähnt, ist die Erfindung insbesondere für den Fall geeignet, dass die Drehung des zweiten Maschinenteils über eine Hohlwelle erfolgt, und der Lichtwellenleiter muss dann lediglich die Hohlwelle umgeben.

Nachfolgend werden besondere Ausführungsformen der Erfindung unter Bezug auf die Zeichnung beschrieben, wobei
- FIG 1: eine Draufsicht auf eines von zwei Maschinenteilen einer erfindungsgemäßen Maschine zeigt und
- FIG 2: eine seitliche Schnittansicht einer erfindungsgemäßen Maschine zeigt,
- FIG 3 und FIG 4: eine erste Ausführungsform eines bei der Erfindung verwendeten Lichtwellenleiters in unterschiedlichen Schnitten veranschaulichen,
- FIG 5: eine zweite Ausführungsform eines bei der Erfindung verwendeten Lichtwellenleiters im Längsschnitt durch den Lichtwellenleiter veranschaulicht und
- FIG 6 und FIG 7: eine dritte Ausführungsform eines bei der Erfindung verwendeten Lichtwellenleiters in unterschiedlichen Schnitten veranschaulichen,

- FIG 8 bis FIG 10: unterschiedliche Möglichkeiten der Einkopplung von Signalen bei Lichtsignalen bei der Erfindung verwendeten Lichtwellenleitern veranschaulichen,
- FIG 11: eine Abwandlung der in FIG 1 gezeigten Ausführungsform zeigt und
- FIG 12: eine alternative Ausführungsform einer erfindungsgemäßen Maschine zeigt.

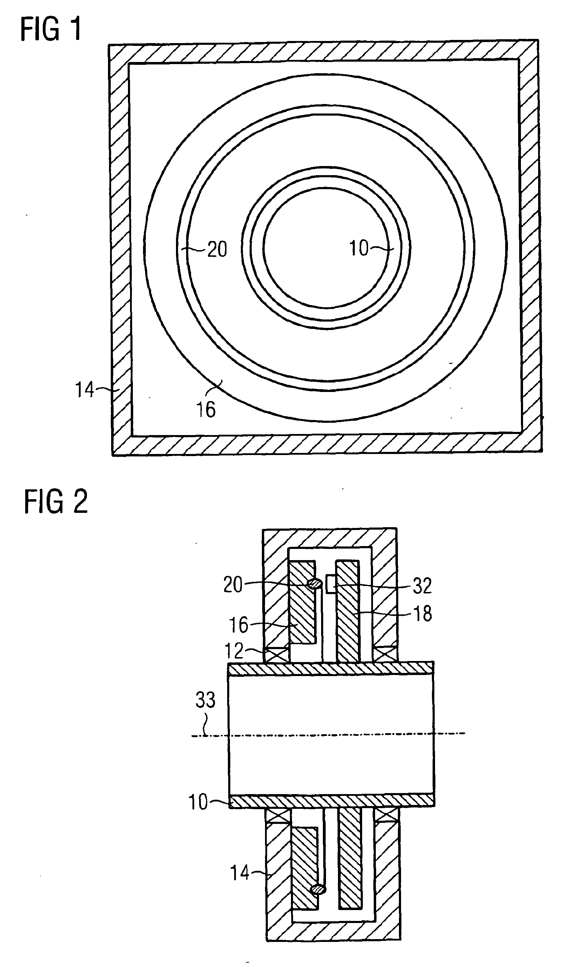

Bei einer in den FIG 1 und 2 in einem Teil gezeigten Maschine geht es darum, Daten von einem feststehenden Bauteil auf ein gegenüber diesem feststehenden Bauteil rotierendes Bauteil zu übertragen. Die Rotation erfolgt insbesondere über eine Hohlwelle 10, welche über Lager 12 in einem Gehäuse 14 gelagert ist. Mit dem Gehäuse 14 fest verbunden ist ein Träger 16 für Bauelemente, die der elektronischen Datenverarbeitung dienen. Der Träger 16 kann als Leiterplatte ausgebildet sein, oder es können die elektronischen Bauteile auf einem Keramiksubstrat bereitgestellt sein. Dem Träger 16, der feststehend zum Gehäuse 14 ist, entspricht ein weiterer Träger 18, welcher an die Hohlwelle 10 gekoppelt ist und mit dieser rotiert. Auf dem Träger 16 ist eine Lichtsignal-Sendeeinrichtung angeordnet, während auf dem Träger 18 eine Empfangseinrichtung für Lichtsignale angeordnet ist.

Die Lichtsignal-Sendeeinrichtung und die Empfangseinrichtung müssen passend zueinander derart ausgestaltet sein, dass bei beliebigem Drehwinkel der Hohlwelle 10 Datensignale zum Empfänger gelangen. Bei den in den FIG 1 und 2 gezeigten Ausführungsformen geschieht dies so, dass die Lichtsignal-Sendeeinrichtung über den gesamten Umfang Licht abstrahlt, wohingegen ein punktförmiger Lichtempfänger verwendet wird. Die Erfindung kann in analoger Weise jedoch auch auf eine punktförmige Lichtquelle und einen ringförmigen Empfänger angewandt werden. Vorliegend erfolgt das Abstrahlen von Licht aus einem Lichtwellenleiter 20 heraus, in den von einer in den FIG 1 und 2 nicht gezeigten Lichtquelle Licht eingekoppelt wird. Kennzeichen herkömmlicher Lichtwellenleiter ist, dass aus ihnen kein Licht austritt. Vorliegend ist ein herkömmlicher Lichtwellenleiter derart abgewandelt, dass ein Teil des von der Lichtquelle eingekoppelten Lichts eben doch austritt, wobei eine geeignete Maßnahme getroffen ist, dass über den gesamten Umfang Licht austritt. Es gibt also keinen Winkel, bei dem kein Licht aus dem Lichtwellenleiter 20 austritt.

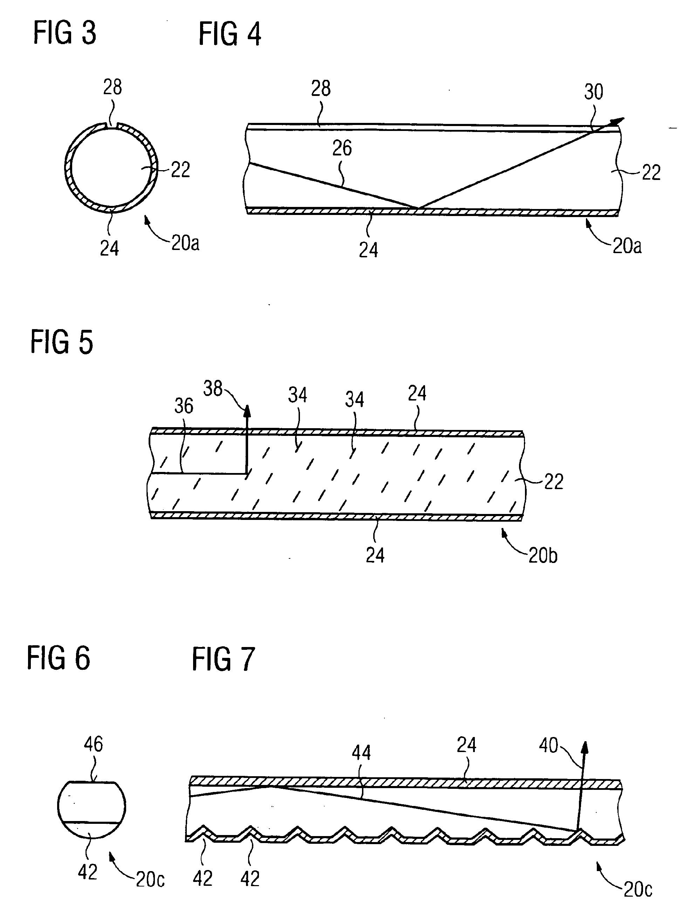

Es gibt verschiedene Möglichkeiten, wie dieses Abstrahlen von Licht bei einem Lichtwellenleiter zu realisieren ist. FIG 3 zeigt einen Querschnitt durch einen Lichtwellenleiter und FIG 4 denselben Lichtwellenleiter in aufgedrehter Form, wobei die horizontale Achse den Winkel darstellt. Der Lichtwellenleiter 20a aus FIG 3 bzw. FIG 4 weist einen Lichtwellenleiterkern 22 auf, der z. B. aus Polymerfaser gebildet ist, und der von einem Mantel 24 umgeben ist, der einen höheren Brechungsindex als die Polymerfaser hat. Wegen des höheren Brechungsindex des Mantels wird ein Lichtstrahl 26 am Mantel 24 reflektiert. Der Lichtwellenleiter 20a unterscheidet sich von herkömmlichen Lichtwellenleitern dadurch, dass der Mantel 24 eine Unterbrechung 28 aufweist. Diese Unterbrechung 28 erstreckt sich, wie aus FIG 4 ersichtlich, über den gesamten Winkelbereich. Da der Mantel 24 unterbrochen ist, tritt an der Unterbrechung 28 ein Lichtstrahl 30 aus. Die Unterbrechung 28 ist nun so angeordnet, dass der Lichtstrahl 30 axial (bezogen auf die Drehachse 32 der Hohlwelle) austritt und daher Licht zum Empfänger 32 auf den Träger 18 gesandt wird.

Bei einem Lichtwellenleiter 20b, der in FIG 5 gezeigt ist, ist der Mantel 24 nicht unterbrochen. Hingegen ist im Lichtwellenleiterkern 22 eine Vielzahl von Streuzentren 34 angeordnet, an denen ein Lichtstrahl 36 gestreut wird. Die Streuzentren 34 sind vorliegend ausgerichtet, und zwar so, dass der Lichtstrahl 36 derart abgelenkt wird, dass er als Strahl 38 im Wesentlichen senkrecht zu dem Mantel 24 abgelenkt wird, so dass er an diesem nicht reflektiert wird, sondern aus dem Mantel 24 austritt.

Die Streuzentren 34 können durch Eintrag von Wärme mit Hilfe eines Lasers in den Lichtwellenleiterkern 22 ausgebildet werden.

Auch bei einem in den FIG 6 und 7 gezeigten Lichtwellenleiter 20c wird für den senkrechten Austritt eines Lichtstrahls 40 aus einem Mantel 24 gesorgt. Hierzu ist in den Lichtwellenleitern 20c eine Vielzahl von Einkerbungen 42 eingebracht, und zwar an der Seite, die der Soll-Austrittsseite des Lichtstrahls 40 gegenüberliegt. Einkerbungen 42 lenken einen sich im Lichtwellenleiter 20c fortbewegenden Lichtstrahl 44 derart ab, dass er eben senkrecht auf den Mantel 24 auftrifft, diesen durchdringt und als Lichtstrahl 40 austritt. Um den Austrittskegel klein zu halten, ist der Lichtwellenleiter 20c auf der Austrittsseite abgeflacht, vergleiche Oberfläche 46.

Nachdem nun unter Bezug auf die FIG 3 bis 7 drei unterschiedliche Ausführungsformen 20a, 20b, 20c des Lichtwellenleiters beschrieben wurden, der bei der Erfindung verwendet werden kann, soll nun das Augenmerk der Einkopplung eines Lichtstrahls in den Lichtwellenleiter gelten. Es geht vorliegend darum, die Einkopplung eines Lichtstrahls derart zu gestalten, dass der Lichtwellenleiter 20 an keinem der Winkel unterbrochen ist, so dass er an diesem Winkel kein Licht abstrahlen würde. Es muss gewährleistet sein, dass der Lichtwellenleiter über den gesamten Umfang Licht abstrahlt.

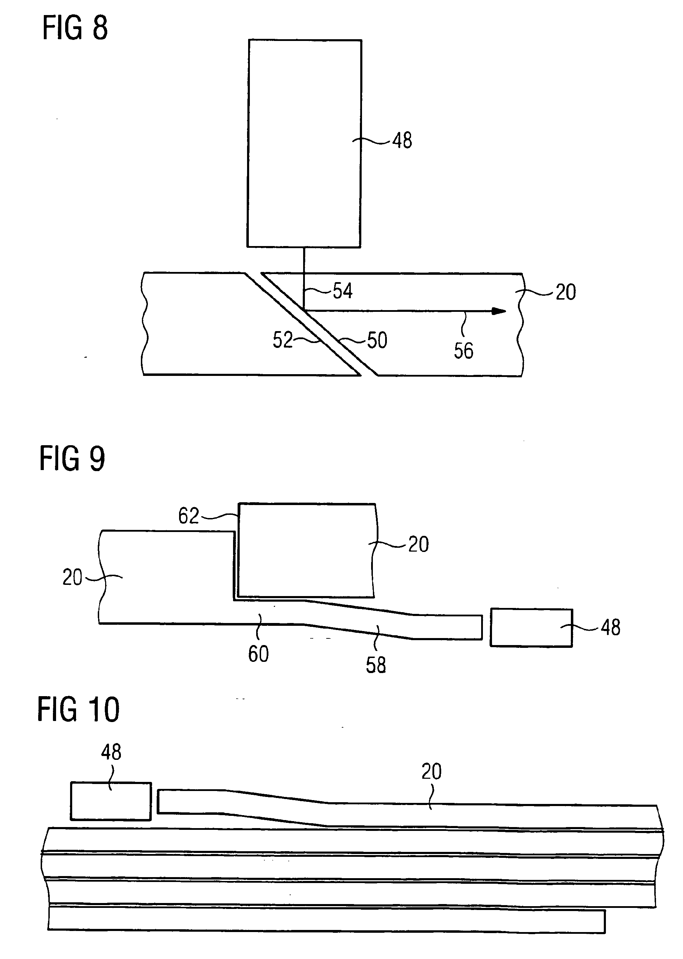

FIG 8 veranschaulicht eine Ausführungsform, bei der eine Lichtquelle 48 radial außerhalb des Lichtwellenleiters 20 angeordnet ist. Der Lichtwellenleiter 20 bildet vorliegend keinen völlig geschlossenen Ring, sondern weist ein abgeschrägtes erstes Ende 50 auf und ein abgeschrägtes zweites Ende 52, wobei die Enden 50 und 52 zusammengeführt sind. Die Lichtquelle 48 sendet Licht senkrecht, d.h. radial zur Drehachse 32 der Hohlwelle 10, auf das abgeschrägte Ende 50, und ein so ausgesandter Lichtstrahl 54 wird an dem abgeschrägten Ende 50 abgelenkt zum Lichtstrahl 56 und bewegt sich im Lichtwellenleiter 20 weiter fort.

Bei der Ausführungsform gemäß FIG 9 weist ein Lichtwellenleiter 20 an einem Ende einen Einkoppelast 58 auf, der einen deutlich kleineren Querschnitt als der Lichtwellenleiter 20 insgesamt hat. Das andere Ende des Lichtwellenleiters 20 stößt oberhalb des Einkoppelastes 58 an das erste Ende des Lichtwellenleiters 20 an. In den Einkoppelast 58 kann eine Lichtquelle 48 nun Licht einkoppeln derart, dass es sich nach Durchlaufen eines Übergangsbereichs 60 im gesamten Lichtwellenleiter 20 fortbewegt. Am anderen Ende des Lichtwellenleiters 20 tritt lediglich an einer überstehenden Stelle 62 etwas Licht aus, der meiste Teil des Lichts wird jedoch von dem einen Ende des Lichtwellenleiters 20 zum anderen Ende übertragen, so dass das Licht mehrfach den Lichtwellenleiter durchlaufen kann.

Bei einer Ausführungsform gemäß FIG 10 ist ein Lichtwellenleiter 20 mehrfach über den Umfang des Kreises gewickelt. Dadurch kann der Lichtwellenleiter 20 einen anderen, insbesondere kleineren Querschnitt aufweisen als der Lichtwellenleiter aus den FIG 8 und 9. Es ist dadurch kein gesonderter Einkoppelzweig 58 wie in FIG 9 erforderlich, sondern es kann über den gesamten Querschnitt des Lichtwellenleiters 20 durch eine Lichtquelle 48 Licht eingekoppelt werden.

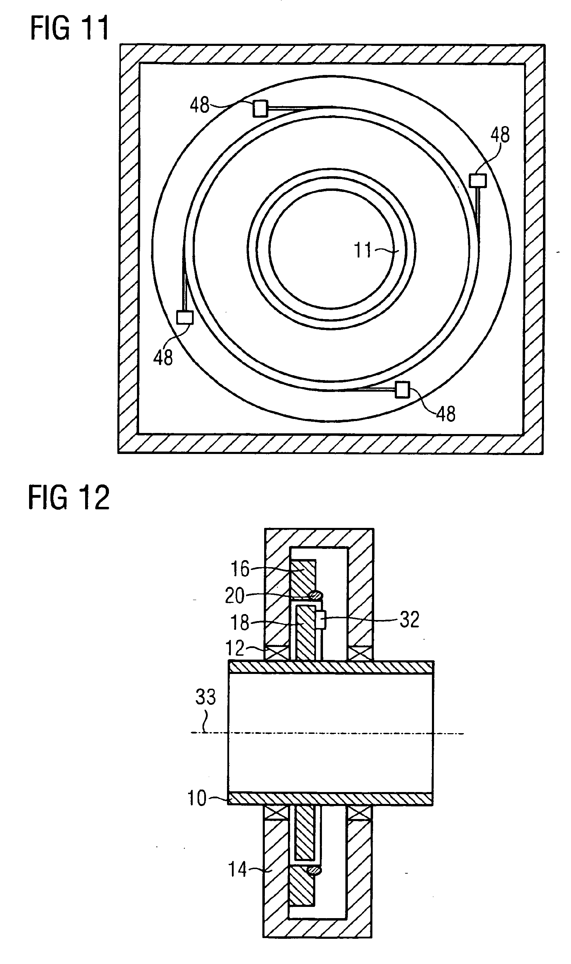

Anders als im Stand der Technik üblich, kommt die Erfindung mit einer einzigen Lichtquelle aus, und es ist der Lichtwellenleiter 20, der das Licht gleichförmig über den Umfang verteilt. Bei der Erfindung ist jedoch nicht ausgeschlossen, dass eine Mehrzahl von Lichtquellen 48 eingesetzt werden, die über den Umfang verteilt sind. Dies ist exemplarisch in FIG 11 dargestellt.

FIG 12 zeigt eine alternative Ausführungsform der Erfindung. Sie unterscheidet sich von der Ausführungsform gemäß FIG 2 darin, dass der feststehende Träger 16 den mit der Hohlwelle 10 rotierenden Träger 18 radial umgibt. Der Lichtwellenleiter 20 strahlt Licht nicht in axialer Richtung ab, sondern radial zur Drehachse 32 der Hohlwelle hin zum Empfänger 32 auf den Träger 18. Die Ausführungsform gemäß FIG 12 ist besonders kurz bauend.

## Patentansprüche

1. Maschine mit einem ersten Maschinenteil (16) und mit einem zweiten Maschinenteil (18), das relativ zu dem ersten Maschinenteil (16) um eine Drehachse (33) drehbar ist, und wobei zum Übermitteln von Datensignalen an dem einen Maschinenteil (16) eine Lichtsignal-Sendeeinrichtung angeordnet ist und an dem anderen Maschinenteil eine Empfangseinrichtung (32) für Lichtsignale angeordnet ist, **wobei** die Maschine an einem der Maschinenteile einen konzentrisch zur Drehachse (33) angeordneten ringförmigen Lichtwellenleiter (20) umfasst, und wobei der ringförmige Lichtwellenleiter (20) derart ausgestaltet und angeordnet ist, dass in ihn von einer Lichtquelle (48) eingekoppeltes Licht an beliebigen Stellen seines Umfangs zum Teil aus dem Lichtwellenleiter in Richtung desjenigen Maschinenteils (18), an dem der Lichtwellenleiter nicht angeordnet ist, austritt, oder dass in ihn an beliebigen Stellen seines Umfangs Licht aus Richtung des Maschinenteils (18), an dem der Lichtwellenleiter nicht angeordnet ist, eintreten kann, **dadurch gekennzeichnet, dass im Lichtwellenleiter (20b) eine Vielzahl von Streuzentren (34) ausgebildet sind, die Licht (36) in eine vorbestimmte Richtung ablenken.**

2. Maschine nach Anspruch 1,
**dadurch gekennzeichnet, dass** der Lichtwellenleiter (20) Teil der Lichtsignal-Sendeeinrichtung ist, wobei eine Lichtquelle (48) an einer Einkoppelstelle Licht einkoppeln kann.

3. Maschine nach Anspruch 1 oder 2, bei dem der Lichtwellenleiter (20a) aus einem Kern (22) und einem Mantel (24) gebildet ist, wobei das den Kern (22) bildende Material einen niedrigeren Brechungsindex aufweist als das den Mantel (24) bildende Material,
**dadurch gekennzeichnet, dass** der Mantel (24) über den gesamten Umfang des Lichtwellenleiterrings hinweg unterbrochen ist.

4. Maschine nach einem der vorhergehenden Ansprüche,
**dadurch gekennzeichnet, dass** der Lichtwellenleiter (20c) an seiner dem Maschinenteil (18), an dem der Lichtwellenleiter (20) nicht angeordnet ist, abgewandten Seite Einkerbungen (42) aufweist.

5. Maschine nach einem der vorhergehenden Ansprüche,
**dadurch gekennzeichnet, dass** die Lichtsignale von der Lichtsignal-Sendeeinrichtung axial bezogen auf die Drehachse (33) des zweiten Maschinenteils (18) zu der Empfangseinrichtung (32) gesandt werden.

6. Maschine nach einem der Ansprüche 1 bis 4,
**dadurch gekennzeichnet, dass** die Lichtsignale von der Lichtsignal-Sendeeinrichtung radial bezogen auf die Drehachse (33) des zweiten Maschinenteils (18) zu der Empfangseinrichtung (32) gesandt werden.

7. Maschine nach einem der vorhergehenden Ansprüche,
**dadurch gekennzeichnet, dass** die Drehung des zweiten Maschinenteils (18) über eine Hohlwelle (10) erfolgt und der Lichtwellenleiter (20) die Hohlwelle (10) umgibt.

## Claims

1. Machine having a first machine part (16) and a second machine part (18) which can be rotated relative to the first machine part (16) about an axis of rotation (33), and wherein for the purpose of transmitting data signals an optical signal transmitting device is disposed on one machine part (16) and a receiving device (32) for receiving optical signals is disposed on the other machine part, wherein the machine includes on one of the machine parts an annular optical waveguide (20) disposed concentrically to the axis of rotation (33), and wherein the annular optical waveguide (20) is embodied and disposed such that some of the light coupled into it by a light source (48) exits from the optical waveguide at arbitrary points on its circumference in the direction of the machine part (18) on which the optical waveguide is not disposed, or that light can enter it at arbitrary points on its circumference from the direction of the machine part (18) on which the optical waveguide is not disposed,
**characterised in that** a plurality of scattering centres (34) are embodied in the optical waveguide (20b) which deflect light (36) in a predetermined direction.

2. Machine according to claim 1,
**characterised in that** the optical waveguide (20) is part of the optical signal transmitting device, wherein a light source (48) can couple in light at a coupling point.

3. Machine according to claim 1 or 2, wherein the optical waveguide (20a) is formed from a core (22) and a cladding (24), with the material forming the core (22) having a lower refractive index than the material forming the cladding (24),
**characterised in that** the cladding (24) is interrupted over the entire circumference of the optical waveguide ring.

4. Machine according to one of the preceding claims,
**characterised in that** the optical waveguide (20c) has indentations (42) on its side facing away from the machine part (18) on which the optical waveguide (20) is not disposed.

5. Machine according to one of the preceding claims,
**characterised in that** the optical signals are sent to the receiving device (32) axially, referred to the axis of rotation (33) of the second machine part (18), by the optical signal transmitting device.

6. Machine according to one of claims 1 to 4,
**characterised in that** the optical signals are sent to the receiving device (32) radially, referred to the axis of rotation (33) of the second machine part (18), by the optical signal transmitting device.

7. Machine according to one of the preceding claims,
**characterised in that** the rotation of the second machine part (18) is effected by way of a hollow shaft (10) and the optical waveguide (20) surrounds the hollow shaft (10).

## Revendications

1. Machine ayant une première partie ( 16 ) de machine et une deuxième partie ( 18 ) de machine, qui est tournante autour d'un axe ( 3 ) de rotation par rapport à la première partie ( 16 ) de machine, et dans laquelle il est monté, pour la transmission de signaux de données, sur l'une des parties ( 16 ) de la machine, un dispositif d'émission de signaux lumineux et, sur l'autre partie de la machine, un dispositif ( 32 ) de réception de signaux lumineux, la machine comprenant, sur l'une des parties de la machine, une fibre ( 20 ) optique annulaire montée concentriquement à l'axe ( 33 ) de rotation et la fibre ( 20 ) optique annulaire étant conformée et montée de manière à ce que de la lumière, qui y est injectée par une source ( 48 ) lumineuse, sorte en des endroits quelconques de son pourtour en partie de la fibre optique en direction de la partie ( 18 ) de la machine où la fibre optique n'est pas montée ou en ce que de la lumière provenant de la direction de la partie ( 18 ) de la machine où la fibre optique n'est pas montée puisse y entrer en des points quelconques de son pourtour,
**caractérisée en ce que**, dans la fibre ( 20b ) optique, sont constitués une pluralité de centres ( 34 ) de dispersion, qui dévient la lumière ( 36 ) dans une direction déterminée à l'avance.

2. Machine suivant la revendication 1,
**caractérisée en ce que** la fibre ( 20 ) optique fait partie du dispositif d'émission de signaux lumineux, une source ( 48 ) lumineuse pouvant injecter de la lumière en un point d'injection.

3. Machine suivant la revendication 1 ou 2, dans laquelle la fibre ( 20a ) optique est constituée d'un coeur ( 22 ) et d'une gaine ( 24 ), le matériau formant le coeur ( 22 ) ayant un indice de réfraction plus petit que le matériau formant la gaine ( 24 ),
**caractérisée en ce que** la gaine ( 24 ) est interrompue au-delà de tout le pourtour de la fibre optique annulaire.

4. Machine suivant l'une des revendications précédentes,
**caractérisée en ce que** la fibre ( 20c ) optique a des entailles ( 42 ) sur son côté éloigné de la partie ( 18 ) de la machine où la fibre ( 20 ) optique n'est pas montée.

5. Machine suivant l'une des revendications précédentes,
**caractérisée en ce que** les signaux lumineux du dispositif d'émission de signaux lumineux sont émis vers le dispositif ( 32 ) de réception axialement rapporté à l'axe ( 33 ) de rotation de la deuxième partie ( 18 ) de la machine.

6. Machine suivant l'une des revendications 1 à 4,
**caractérisée en ce que** les signaux lumineux du dispositif d'émission de signaux lumineux sont émis vers le dispositif ( 32 ) de réception radialement rapporté à l'axe ( 33 ) de rotation de la deuxième partie ( 18 ) de la machine.

7. Machine suivant l'une des revendications précédentes,
**caractérisée en ce que** la rotation de la deuxième partie ( 18 ) de la machine s'effectue par l'intermédiaire d'un arbre ( 10 ) creux et la fibre ( 20 ) optique entoure l'arbre ( 10 ) creux.
